# EUROPÄISCHE PATENTSCHRIFT

(11) **EP 3 162 653 B1**
(45) Veröffentlichungstag und Bekanntmachung des Hinweises auf die Patenterteilung: **11.08.2021**
(21) Anmeldenummer: 16190389.3
(22) Anmeldetag: 23.09.2016
(51) Int. Cl.: B62B 3/06, B62B 5/00, B66F 9/12

(54) **FLURFÖRDERZEUG MIT RADARMEN UND MIT EINEM ZUSATZGERÄTEHALTER**
INDUSTRIAL TRUCK WITH WHEEL ARMS AND WITH ADDITIONAL DEVICE HOLDER
CHARIOT DE MANUTENTION AVEC BRAS DE ROUE ET AVEC PORTE-ACCESSOIRE

(30) Priorität: 30.10.2015 DE 102015118651
(43) Veröffentlichungstag der Anmeldung: 03.05.2017
(73) Patentinhaber: STILL GmbH, 22113 Hamburg (DE)
(72) Erfinder: Haake, Kai, 21073 Hamburg (DE)
(74) Vertreter: Patentship Patentanwaltsgesellschaft mbH

(56) Entgegenhaltungen:
- EP-A1- 3 026 005
- WO-A1-2010/007621
- DE-A1-102010 047 630
- DE-U1- 9 306 107
- DE-U1-202005 005 409
- None

## Beschreibung

Die Erfindung betrifft ein Flurförderzeug mit Radarmen, in denen Lastrollen angeordnet sind, und einem Zusatzgerätehalter.

Für Ladungsträger, beispielsweise genormte Europaletten, ist es bekannt, diese mit Transpondern auszustatten, um beispielsweise in Warenwirtschaftssystemen und Lagern die Bewegungen sowie die Positionen von Waren bzw. der Ladungsträgern erfassen zu können. Dabei bieten sich verschiedene Möglichkeiten an, solche Transponder, beispielsweise RFID-Tags, anzubringen. Eine bevorzugte Option ist dabei die Anbringung von zwei Transpondern an einem Ladungsträger, beispielsweise einer Europalette, wobei jeweils ein Transponder auf einem Mittelklotz an zwei über ein Eck verbundenen Außenkanten der Palette angeordnet ist. Für die Identifikation von Paletten durch RFID-Transponder bestehen EPAL-Standards.

Um bei einem solchen Ladungsträger bzw. einer solchen Palette bei einer Aufnahme mit einer Lastgabel bzw. beim Einfahren der Gabelzinken den Transponder auslesen zu können, sind bevorzugt zwei Sende- und Empfangseinrichtungen der Ausleseeinrichtung, beispielsweise RFID-Antennen, nach außen gerichtet an den Außenseiten der Gabelzinken. Möglichkeiten für eine solche Anbringung sind dabei, dass die Antenne sich entweder bereits integriert in den Gabelzinken, oder in einem zusätzlich übergezogenen Gabelschuh bzw. eventuell in einer abgewandelten kombinierten Form angebracht befindet. Bekannt ist es weiterhin, die Informationen zu vernetzen und beispielsweise alle Flurförderzeuge in einem Lager drahtlos mit einem zentralen Warenwirtschaftssystem zu verbinden.

Besonders eine Lösung unter Verwendung von Gabelschuhen bietet die Möglichkeit, ganze Flurförderzeugflotten, bestehend aus Fahrzeugen unterschiedlicher Hersteller und Typen, mit einem solchen Warenwirtschaftssystem nachzurüsten. Gabelschuhe sind bekannt, um den Verschleiß der sich bei der Benutzung ab schleichenden Gabelzinken und die Gefahr von Brüchen der Gabelzinken zu vermeiden. Durch einen übergezogenen Gabelschuh wird allein dieser verschlissen und wird die darunter befindliche Gabelzinke geschont. Weiterhin bietet ein Gabelschuh die Möglichkeit, Zusatzgeräte, im Beispielsfall eine Sende- und Empfangseinrichtung für RFID-Transponder unterzubringen oder die wirksame Arbeitslänge der Gabelzinke nach vorne zu verlängern.

Aus WO 2010/007621 A1 ist ein mit einer Hülse ausgestatteter Gabelstapler bekannt, wobei in der Hülse ein RFID-Leser enthalten ist. Die Hülse ist auf eine Gabelzinke auf steckbar.

Aus DE 10 2010 047 630 A1 ist ein Gabelschuh für eine Gabelzinke eines Flurförderzeugs mit einem Hohlraum für die Aufnahme des Gabelblattes der Gabelzinke bekannt.

Aus DE 93 06 107 U1 ist ein an einer Gabelzinke eines Gabelstaplers seitlich angeordnetes Schutzgehäuse mit einer Schreib/Leseanordnung bekannt, wobei die Schreib/Leseanordnung zum Zusammenwirken mit einem an einer Palette angeordneten Gehäuse ausgebildet ist.

Ein erheblicher Teil der im Lagerbereich zum Einsatz kommenden Flurförderzeuge sind jedoch Lagertechnikgeräte, und insbesondere Gabelhubwagen. Diese Flurförderzeuge weisen Radarme anstatt einer Gabelzinke auf, wobei die Radarme nur einen Initialhub durchführen, um eine Palette vom Boden anzuheben. In den Radarmen befinden sich vordere Lastrollen sowie ein Betätigungsgestänge für die Lastrollen, um diese für den Initialhub nach unten zu schwenken bzw. zu drücken.

Ein Gabelschuh zur Unterbringung der Sende- und Empfangsanlage für RFID-Transponder ist daher nicht einsetzbar. Die Radarmen dieser Flurförderzeugen bilden jedoch einen tragenden Strukturteil des Fahrzeugs und sind entsprechend konstruiert bzw. weisen eine massive und/oder komplexe Struktur auf. Eine ideale, robuste Anordnung der Sende- und Empfangseinrichtung für RFID-Transponder unter Berücksichtigung der Betriebsverhältnisse im Bereich der Intralogistik müsste ein vollständig metallisch geschlossenes Gehäuse aufweisen und nur eine kleine nicht metallische verschlossene, beispielsweise mit Kunststoff überdeckte, Öffnung für die Antennen aufweisen.

Nachteilig an zu einem solchen Stand der Technik ist jedoch, dass derartige Öffnungen in den Radarmen die mechanische Festigkeit beeinflussen würden und eine Konstruktionsanpassung bzw. neuer Abnahmetests und Festigkeitsberechnungen erfordern. Eine Nachrüstung ist daher nicht möglich. Dies ist besonders nachteilig, wenn in einer größeren Flotte von Flurförderzeugen dadurch Lagertechnikgeräte mit Radarmen nicht in ein Warenwirtschaftssystem integriert werden können.

Der vorliegenden Erfindung liegt die daher Aufgabe zugrunde, einen Zusatzgerätehalter für ein Flurförderzeug mit Radarmen zur Verfügung zu stellen, durch den die zuvor genannten Nachteile vermieden werden und mit dem Zusatzgeräte, insbesondere Sende- und Empfangsanlagen für RFID-Transponder leicht nachgerüstet werden können.

Diese Aufgabe wird durch ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Flurförderzeug mit Radarmen, in denen Lastrollen angeordnet sind, und mit einem Zusatzgerätehalter, der Zusatzgerätehalter aus einem Auflageblech, das auf dem Radarm in der Montageposition aufliegt, und außen seitwärts über den Radarm und die Lastrollen übersteht, einem äußeren senkrechten Blech und inneren Anschlägen besteht, wobei durch die inneren Anschläge, die an dem Radarm anliegen, und das äußere senkrechte Blech ein Kanal seitlich des Radarms gebildet wird, in den Zusatzgeräte eingesetzt werden können.

Dadurch können Zusatzgeräte in dem seitlichen Kanal der sich zwischen dem Radarm und dem äußeren senkrechten Blech bildet, geschützt aufgenommen werden. Insbesondere kann auch eine Kabelverbindung eines solchen Zusatzgerätes nach hinten bis zu einem beispielsweise Antriebsteil bei einem Gabelhubwagen als Ausführungsbeispiel eines Radarm-Flurförderzeugs geführt werden. Der Zusatzgerätehalter liegt wie eine Art Satteltasche auf dem Radarmen auf. Es können innerhalb einer Flurförderzeugflotte somit auch Flurförderzeuge mit Radarmen mit solchen Zusatzgeräten nachgerüstet werden, ohne dass die mechanische Struktur der Radarme wesentlich verändert werden muss oder überhaupt beeinflusst wird. Dadurch ergibt sich eine große Flexibilität und wird eine durchgehende Ausrüstung einer Flurförderzeugflotte mit Zusatzgeräten im Rahmen eines Warenwirtschaftssystems oftmals erst möglich. Grundsätzlich können mehrere Zusatzgeräte oder Zusatzgeräte mit mehreren Funktionen in dem erfindungsgemäßen Zusatzgeräte Halter montiert werden. Dabei kann es sich um Zusatzgeräte aller Art handeln, Sensoren, Sende- und Empfangsanlagen, insbesondere für RFID-Transponder etc.

Die inneren Anschläge können ein inneres senkrechtes Blech sein.

Damit ist der Kanal auch geschlossen gegenüber der Seite des Radarms.

Das innere senkrechte Blech kann in Schlitzen durch das Auflageblech greifen und mit diesem auf der Oberseite verschweißt sein.

Beispielsweise kann das innere senkrechte Blech immer wieder durch kurze Schlitze durch das Auflageblech durchgreifen und auf der Oberseite mit diesem verschweißt sein. Durch diese Konstruktionsweise wird eine Schweißnaht in der inneren, oberen Ecke zum Radarm hin, die gegebenenfalls bei der Anlage an den Radarm stören könnte, vermieden.

Vorteilhaft bildet das äußere senkrechte Blech am vorderen Ende eine auf den Radarm zulaufende Abschrägung.

Wenn auf beiden Radarmen eines entsprechenden Flurförderzeugs jeweils ein erfindungsgemäßer Zusatzgerätehalter mit einem solchen äußeren senkrechten Blech mit einer zulaufenden Abschrägung eingesetzt wird, hilft dies beim Einfahren in eine Palette zu zentrieren, soweit der Zusatzgerätehalter seitlich nach dem eigentlichen Bereich der Lastrolle über den Radarm hinaus steht. Die Maße des Zusatzgerätehalters und insbesondere die Breite des Kanals, somit die sich ergebende Verbreiterung der Radarme, sind derart gewählt, dass ein Aufnahmen von Standardladungsträgern, wie insbesondere Europaletten, weiterhin möglich ist, speziell in Längsrichtung.

Das äußere senkrechte Blech kann am hinteren Ende eine auf den Radarm zulaufende Abschrägung bilden.

Bei Fahrzeugen mit extralangen Radarmen ergibt sich zum einen die Möglichkeit, einen Zusatzgerätehalter mit einer vergrößerten Länge bis zum Anschlag einer Ladungsaufnahme bzw. dem hinteren Ende der Radarme vorzusehen. Alternativ kann der Zusatzgerätehalter kurz ausgeführt werden und durch die beschriebene Abschrägung am hinteren Ende erreicht werden, dass beim Abladen eines Ladungsträgers dieser nicht hängenbleibt. Es kann bei extralangen Radarmen auch sinnvoll sein, mehrere Zusatzgerätehalter, insbesondere mit Sende- und Empfangsanlagen für RFID-Transponder ausgerüstete Zusatzgerätehalter, hintereinander zu montieren oder mehrere Sende- und Empfangsanlagen für RFID-Transponder in einem Zusatzgerätehalter vorzusehen.

Das Auflageblech kann am Vorderende angefast sein.

Dadurch wird ein hängen bleiben an einer Palette beim Einfahren in diese verhindert, insbesondere wenn der Radarm nicht vollständig abgesenkt ist.

Vorteilhaft kann das Auflageblech durch eine Klebeverbindung mit dem Radarm befestigt werden.

Da eine relativ große Fläche auf der Oberseite des Radarms zur Verfügung steht, kann die Verbindung durch eine Klebeverbindung erfolgen, die keinerlei Auswirkungen auf die Festigkeit und Struktur des Radarms hat.

Das Auflageblech kann durch eine Niet- und/oder Schraubverbindung mit dem Radarm befestigt werden kann.

Da der Zusatzgerätehalter bei der Aufnahme einer Last nur geringe Kräfte aufzunehmen hat und bei einer aufliegenden Last zwischen dieser und dem Radarm festgeklemmt wird, können auch gering dimensionierte Niet- und/oder Schraubverbindungen gewählt werden auf der Oberseite des Radarms, ohne strukturell den Radarm zu beeinträchtigen.

In dem äußeren senkrechten Blech kann eine Öffnung für Sensoren und/oder Antennen vorgesehen sein.

Als Zusatzgerät wird vorteilhaft eine Sende- und Empfangseinrichtung eingesetzt, bevorzugt für RFID Transponder.

Durch entsprechende Sender und Empfänger können somit auch in der Nachrüstung Lagertechnikgeräte mit Radarmen in ein Warenwirtschaftssystem integriert werden. Besonders vorteilhaft ist dies in Bezug auf Systeme für RFID-gekennzeichnete Paletten.

Weitere Vorteile und Einzelheiten der Erfindung werden anhand der in den schematischen Figuren dargestellten Ausführungsbeispiele näher erläutert. Hierbei zeigt
- Fig. 1: schematisch in Aufsicht ein Flurförderzeug mit Radarmen nach dem Stand der Technik,
- Fig. 2: das Flurförderzeug der Fig. 1 mit zwei erfindungsgemäßen Zusatzgerätehaltern,
- Fig. 3: einen Handgabelhubwagen mit zwei erfindungsgemäßen Zusatzgerätehaltern,
- Fig. 4: den Zusatzgerätehalter in Perspektivenansicht schräg von der Seite,
- Fig. 5: den Zusatzgerätehalter in Perspektivenansicht schräg von oben und
- Fig. 6: den Zusatzgerätehalter in Ansicht von unten.

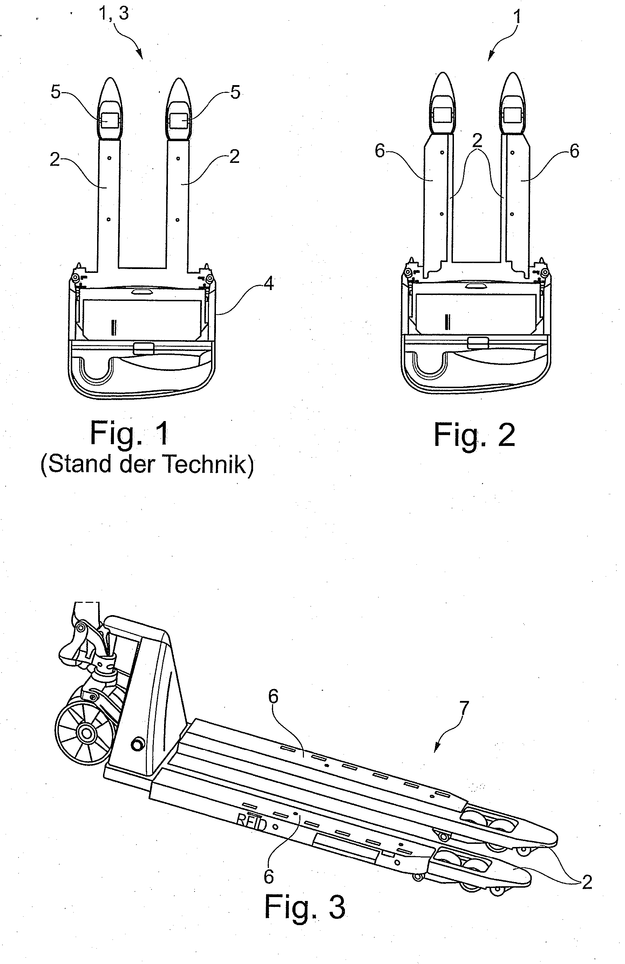

Die Fig. 1 zeigt schematisch in Aufsicht ein Flurförderzeug 1 mit Radarmen 2 nach dem Stand der Technik. Es handelt sich dabei um einen Gabelhubwagen 3 mit einem Antriebsteil 4. Durch Lastrollen 5, die in den Radarmen 2 angeordnet sind, ist es nicht möglich hier, Gabelschuhe einzusetzen.

Die Fig. 2 zeigt das Flurförderzeug der Fig. 1 mit zwei erfindungsgemäßen Zusatzgerätehaltern 6, die jeweils so auf die Radarmen 2 gesetzt sind, dass ein Kanal für Zusatzgeräte an der Außenseite der Radarme 2 sich befindet.

Die Fig. 3 zeigt einen Handgabelhubwagen 7 mit zwei erfindungsgemäßen Zusatzgerätehaltern 6, als Beispiel für eine weitere Einsatzmöglichkeit bei einem Flurförderzeug mit Radarmen 2.

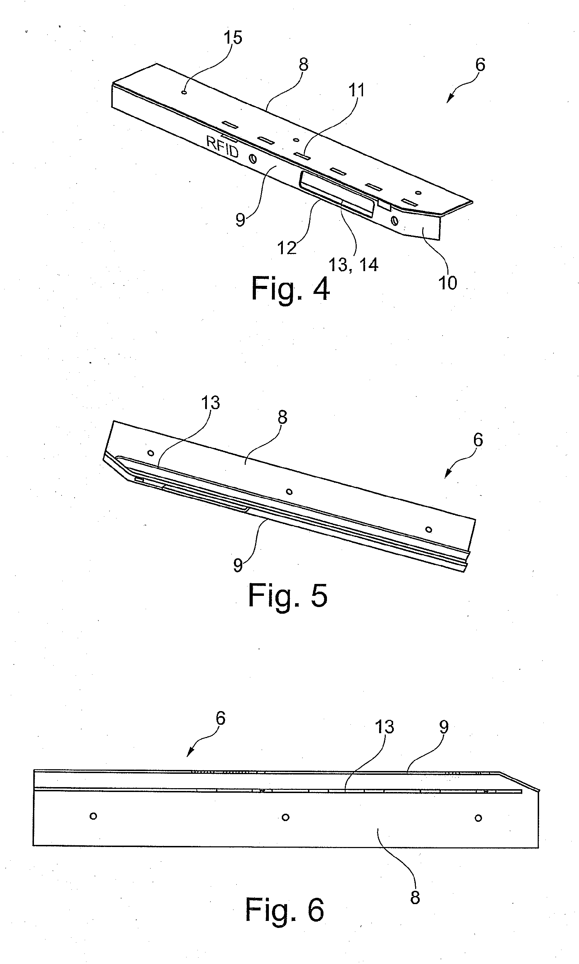

Die Fig. 4 zeigt den Zusatzgerätehalter 6 in Perspektivenansicht schräg von der Seite. An ein Auflageblech 8 schließt sich ein äußeres senkrechtes Blech 9 an, das an seinem vorderen Ende in einer Abschrägung 10 auf den Radarmen 2 in der Montageposition zuläuft. Durch Schlitze 11 greift ein hier nur durch eine Öffnung 12 erkennbares inneres senkrechtes Blech 13 als innerer Anschlag 14 nach oben durch und ist an der Oberseite mit dem Auflageblech 8 verschweißt. Über 3 Bohrungen 15 kann eine Schraubverbindung des Auflageblechs 8 mit der Oberseite des Radarms 2 hergestellt werden. Es ist jedoch auch eine reine Klebeverbindung möglich.

Die Fig. 5 zeigt den Zusatzgerätehalter 6 in Perspektivenansicht schräg von oben mit dem inneren senkrechten Blech 13, dem äußeren senkrechten Blech 9 und dem Auflageblech 8.

Die Fig. 6 zeigt den Zusatzgerätehalter 6 in Ansicht von unten mit dem inneren senkrechten Blech 13, dem äußeren senkrechten Blech 9 und dem Auflageblech 8.

## Patentansprüche

1. Flurförderzeug (1) mit Radarmen (2), in denen Lastrollen (5) angeordnet sind, und einem Zusatzgerätehalter (6),
**dadurch gekennzeichnet,**
**dass** der Zusatzgerätehalter (6) aus einem Auflageblech (8), das auf dem Radarm (2) in der Montageposition aufliegt, und außen seitwärts über den Radarm (2) und die Lastrollen (5) übersteht, einem äußeren senkrechten Blech (9) und inneren Anschlägen (14) besteht, wobei durch die inneren Anschläge (14), die an dem Radarm (2) anliegen, und das äußere senkrechte Blech (9) ein Kanal seitlich des Radarms (2) gebildet wird, in den Zusatzgeräte eingesetzt werden können.

2. Flurförderzeug (1) nach Anspruch 1,
**dadurch gekennzeichnet,**
**dass** die inneren Anschläge (14) ein inneres senkrechtes Blech (13) sind.

3. Flurförderzeug (1) nach Anspruch 2,
**dadurch gekennzeichnet,**
**dass** das innere senkrechte Blech (13) in Schlitzen durch das Auflageblech (8) greift und mit diesem auf der Oberseite verschweißt ist.

4. Flurförderzeug (1) nach einem der Ansprüche 1 bis 3,
**dadurch gekennzeichnet,**
**dass** das äußere senkrechte Blech (9) am vorderen Ende eine auf den Radarm (2) zulaufende Abschrägung (10) bildet.

5. Flurförderzeug (1) nach einem der Ansprüche 1 bis 4,
**dadurch gekennzeichnet,**
**dass** das äußere senkrechte Blech (9) am hinteren Ende eine auf den Radarm zulaufende Abschrägung bildet

6. Flurförderzeug (1) nach einem der Ansprüche 1 bis 5,
**dadurch gekennzeichnet,**
**dass** das Auflageblech (8) am Vorderende angefast ist.

7. Flurförderzeug (1) nach einem der Ansprüche 1 bis 6,
**dadurch gekennzeichnet,**
**dass** das Auflageblech (8) durch eine Klebeverbindung mit dem Radarm (2) befestigt werden kann.

8. Flurförderzeug (1) nach einem der Ansprüche 1 bis 7,
**dadurch gekennzeichnet,**
**dass** das Auflageblech (8) durch eine Niet- und/oder Schraubverbindung (15) mit dem Radarm (2) befestigt werden kann.

9. Flurförderzeug (1) nach einem der Ansprüche 1 bis 7,
**dadurch gekennzeichnet,**
**dass** in dem äußeren senkrechten Blech (9) eine Öffnung (12) für Sensoren und/oder Antennen vorgesehen ist.

10. Flurförderzeug (1) nach Anspruch 9,
**dadurch gekennzeichnet,**
**dass** als Zusatzgerät eine Sende- und Empfangseinrichtung eingesetzt ist, bevorzugt für RFID-Transponder.

## Claims

1. Industrial truck (1) having wheel arms (2), loadbearing rollers (5) being disposed in the latter, and an auxiliary apparatus holder (6),
**characterized in that**
the auxiliary apparatus holder (6) is composed of a sheet-metal bearing plate (8) which in the assembled position bears on the wheel arm (2) and externally projects laterally beyond the wheel arm (2) and the loadbearing rollers (5), and of an external perpendicular sheet-metal plate (9) and internal detents (14), wherein a duct which is lateral to the wheel arm (2) and into which auxiliary apparatuses can be inserted is formed by the internal detents (14), the latter bearing on the wheel arm (2), and by the external perpendicular sheet-metal plate (9).

2. Industrial truck (1) according to Claim 1, **characterized in that**
the internal detents (14) are an internal perpendicular sheet-metal plate (13).

3. Industrial truck (1) according to Claim 2, **characterized in that**
the internal perpendicular sheet-metal plate (13) in slots engages through the sheet-metal bearing plate (8) and on the upper side is welded to the latter.

4. Industrial truck (1) according to one of Claims 1 to 3,
**characterized in that**
the external perpendicular sheet-metal plate (9) at the front end forms a bevel (10) which tapers towards the wheel arm (2).

5. Industrial truck (1) according to one of Claims 1 to 4,
**characterized in that**
the external perpendicular sheet-metal plate (9) at the rear end forms a bevel which tapers towards the wheel arm.

6. Industrial truck (1) according to one of Claims 1 to 5,
**characterized in that**
the sheet-metal bearing plate (8) is chamfered at the front end.

7. Industrial truck (1) according to one of Claims 1 to 6,
**characterized in that**
the sheet-metal bearing plate (8) can be fastened to the wheel arm (2) by way of an adhesively bonded connection.

8. Industrial truck (1) according to one of Claims 1 to 7,
**characterized in that**
the sheet-metal bearing plate (8) can be fastened to the wheel arm (2) by way of a rivet and/or screw connection (15) .

9. Industrial truck (1) according to one of Claims 1 to 7,
**characterized in that**
an opening (12) for sensors and/or antennae is provided in the external perpendicular sheet-metal plate (9).

10. Industrial truck (1) according to Claim 9,
**characterized in that**
a transceiver installation, preferably for RFID transponders, is inserted as an auxiliary apparatus.

## Revendications

1. Chariot de manutention (1) comprenant des bras de roue (2) dans lesquels sont disposés des galets de charge (5), et un support d'accessoires (6), **caractérisé en ce que** le support d'accessoires (6) est composé d'une tôle de support (8) reposant sur le bras de roue (2) dans la position de montage et faisant saillie latéralement vers l'extérieur au-delà du bras de roue (2) et des galets de charge (5), d'une tôle verticale extérieure (9) et de butées intérieures (14), les butées intérieures (14) qui reposent sur le bras de roue (2) et la tôle verticale extérieure (9) formant un canal à côté du bras de roue (2) dans lequel des accessoires peuvent être insérés.

2. Chariot de manutention (1) selon la revendication 1, **caractérisé en ce que** les butées intérieures (14) correspondent à une tôle verticale intérieure (13).

3. Chariot de manutention (1) selon la revendication 2, **caractérisé en ce que** la tôle verticale intérieure (13) vient en prise dans des fentes à travers la tôle de support (8) et est soudée à celle-ci sur la face supérieure.

4. Chariot de manutention (1) selon l'une quelconque des revendications 1 à 3, **caractérisé en ce que** la tôle verticale extérieure (9) forme à l'extrémité avant un chanfrein (10) convergeant vers le bras de roue (2).

5. Chariot de manutention (1) selon l'une quelconque des revendications 1 à 4, **caractérisé en ce que** la tôle verticale extérieure (9) forme à l'extrémité arrière un chanfrein convergeant vers le bras de roue.

6. Chariot de manutention (1) selon l'une quelconque des revendications 1 à 5, **caractérisé en ce que** la tôle de support (8) est biseautée à l'extrémité avant.

7. Chariot de manutention (1) selon l'une quelconque des revendications 1 à 6, **caractérisé en ce que** la tôle de support (8) peut être fixée au bras de roue (2) par un assemblage collé.

8. Chariot de manutention (1) selon l'une quelconque des revendications 1 à 7, **caractérisé en ce que** la tôle de support (8) peut être fixée au bras de roue (2) par un assemblage riveté et/ou vissé (15).

9. Chariot de manutention (1) selon l'une quelconque des revendications 1 à 7, **caractérisé en ce qu'**une ouverture (12) pour des capteurs et/ou des antennes est prévue dans la tôle verticale extérieure (9).

10. Chariot de manutention (1) selon la revendication 9, **caractérisé en ce qu'**un dispositif d'émission et de réception, de préférence pour des transpondeurs RFID, est mis en œuvre comme accessoire.
